# EUROPÄISCHE PATENTSCHRIFT

(11) **EP 2 767 744 B1**
(45) Veröffentlichungstag und Bekanntmachung des Hinweises auf die Patenterteilung: **31.07.2019**
(21) Anmeldenummer: 14000367.4
(22) Anmeldetag: 31.01.2014
(51) Int. Cl.: F16K 11/065, E03C 1/04, F16K 11/078

(54) **Steuerscheibe für Mischarmatur**
Control disc for mixing valve
Disque de commande de robinet mitigeur

(30) Priorität: 13.02.2013 DE 102013002396
(43) Veröffentlichungstag der Anmeldung: 20.08.2014
(73) Patentinhaber: Grohe AG, 58675 Hemer (DE)
(72) Erfinder: Kostorz, Ole Benedikt, 58706 Menden (DE); Steinhoff, Stefan, 59846 Sundern (DE)

(56) Entgegenhaltungen:
- WO-A1-2008/095102
- DE-U1-202012 100 685
- US-A- 42 154
- US-A- 267 791
- US-A- 3 805 833
- US-A1- 2006 174 955
- US-B1- 6 386 233

## Beschreibung

Die vorliegende Erfindung betrifft eine Steuerscheibe für einen Steuersatz einer sanitären Mischarmatur mit jeweils mindestens einem Durchtrittskanal für Kaltwasser und Warmwasser und einem Auslass für Mischwasser.

Im Stand der Technik sind bereits Mischarmaturen bekannt bei denen eine feststehende ebene Scheibe zwei Wasserdurchtrittskanäle aufweist, von denen eine für Warmwasser und die andere für Kaltwasser bestimmt ist. Gegenüber dieser feststehenden Scheibe ist eine weitere Scheibe verschiebbar und verdrehbar, wobei die bewegbare Scheibe die beiden Durchtrittskanäle vollständig abdecken und vollständig öffnen kann. Durch Verdrehen der bewegbaren Scheibe wird das Mischungsverhältnis und durch Verschieben der bewegbaren Scheibe die Gesamtmenge an durchströmendem Wasser bestimmt. Eine derartige Mischarmatur ist beispielsweise aus der DE 34 19 208 A1 bekannt.

Weitere Ausführungsvarianten von Steuerscheiben für solche Anwendungen werden in der DE 20 2012 100685 U1, der US 2006/174955 A1, der US 6 386 233 B1 oder der WO 2008/095102 A1 gezeigt, wobei sich diese Schriften mit Problemen wie erhöhtem Verschleiß oder Montageaufwand von Mischarmaturen beschäftigen.

An moderne Mischarmaturen werden im zunehmenden Maße höhere Anforderungen hinsichtlich der Sensibilität gestellt. Als Merkmal für die Sensibilität einer Mischarmatur kann beispielsweise der Weg bzw. der Drehwinkel verstanden werden, den ein Hebelende bzw. ein Hebel zwischen einer Mischerstellung mit 34°C warmen Mischwasser und einer Mischerstellung mit 44°C warmen Wasser zurücklegt. Je größer dieser Weg bzw. Drehwinkel ist, desto sensibler und leichter einzustellen ist die Mischarmatur. Bekannte Lösungsansätze zur Steigerung der Sensibilität stellen so genannte Sensibilitätsnocken an der Steuerscheibe dar, die eine Reduzierung des Strömungsquerschnitts bewirken. Mit der Reduzierung des Strömungsquerschnitts ist jedoch auch die nachteilige Reduzierung des Durchflusses im Kalt- und Warmwasseranschlag verbunden.

Aufgabe der Erfindung ist es daher, die sich aus dem Stand der Technik ergebenden Probleme zumindest teilweise zu lösen und insbesondere eine besonders sensible Mischarmatur bei gleichzeitig hohem Durchfluss bereitzustellen.

Diese Aufgaben werden mit einer Steuerscheibe gemäß den Merkmalen des Patentanspruchs 1 gelöst. Weitere vorteilhafte Ausgestaltungen der Erfindung sind in den abhängig formulierten Patentansprüchen angegeben. Es ist darauf hinzuweisen, dass die in den abhängig formulierten Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausführungsbeispiele der Erfindung dargestellt werden.

Vorliegend wird die Aufgabe durch eine Steuerscheibe für einen Steuersatz einer sanitären Mischarmatur gelöst, wobei die Steuerscheibe jeweils mindestens einen Durchtrittskanal für Kaltwasser und Warmwasser und einen Auslass für Mischwasser umfasst, wobei wenigstens ein Durchtrittskanal einen sich in Bewegungsrichtung der beweglichen Steuerscheibe verkleinernden Querschnitt aufweist, der von einem Boden teilweise begrenzt wird, wobei der Boden des Durchtrittskanals sich über einen Winkel erstreckt, der zwischen 25° bis 80° liegt, wobei der Winkel bestimmt wird im Fall von kreisrunden Grundformen der Steuerscheibe von einer zentralen Mittelachse und im Fall von nicht kreisrunden Geometrien von dem Flächenschwerpunkt oder einer Drehachse eines Bedienhebels der Mischarmatur, wobei der Durchtrittskanal zumindest teilweise einen Boden aufweist, der in Richtung von einer Einlasskante zu einer Auslasskante um einen Anstiegswinkel ansteigt, und wobei die Böden der Durchtrittskanäle für das Kaltwasser und Warmwasser in eine gleiche Umfangsrichtung der Steuerscheibe ansteigen. Die Länge des Durchtrittskanals, kurz Kanallänge, ist dabei die Weglänge in Bewegungsrichtung zwischen einer Einlasskante und einer Auslasskante der Steuerscheibe. Unter der Gesamtbewegungslänge ist die maximale Länge einer beliebigen Bewegungsbahn zu verstehen, welche eine Steuerscheibe bei einer Bewegung zwischen zwei Anschlag- bzw. Maximal- und Minimalstellungen zurücklegen kann. Bei einer Drehbewegung entspricht die Bewegungsrichtung beispielsweise einer Kreisbahn. Es können aber auch beliebige andere Bewegungsrichtungen, wie die von linearen translatorischen oder räumliche Bewegungsbahnen abgefahren werden. Hierbei wird der Querschnitt des Durchtrittskanals wahlweise konstant gehalten oder in Richtung von einer Offenstellung hin zu einer Schließstellung des Steuersatzes verkleinert.
An Stelle der bekannten Durchtrittskanäle hat die vorliegende Erfindung erkannt, dass sich durch einen gestreckten Durchtrittskanal die Sensibilität der Steuerscheibe und damit der gesamten Mischarmatur deutlich verbessert. Dies ist darin begründet, dass sich die Zustandsänderung von einem komplett geöffneten Querschnitt bis zu einem vollständig verschlossenen Querschnitt durch die Erfindung auf einen viel größeren Winkelbereich bzw. eine viel größere Wegstrecke des Hebels aufteilt. Je größer dabei die Erstreckung des Durchtrittskanals und damit die Kanallänge ist, umso größer wird auch die Sensibilität der Steuerscheibe. Die Erfindung hat dabei herausgefunden, dass sich solche Erstreckungen bezogen auf den Winkel in Umfangsrichtung der Steuerscheibe bewährt haben. Steuerscheiben haben im Wesentlichen eine kreisrunde Grundform, die von funktionalen Bereichen unterbrochen wird. Der für die Erfindung maßgebliche Winkelbereich wird dabei von einer zentralen Mittelachse des kreisrunden Querschnitts gemessen. Im Falle nicht kreisrunder Geometrien ist der Winkelbereich in Bezug auf den Flächenschwerpunkt oder die Drehachse des Bedienhebels gemessen werden.

Hierbei liegt der Winkel zwischen 25° und 80°, wobei besonders gute Ergebnisse zwischen 50° und 70° erreicht werden. In diesen Winkelbereichen ist eine günstige Ergonomie gewährleistet, so dass der Benutzer der Mischarmatur die Bedienung als angenehm und gleichzeitig sensibel empfindet.

Es ist vorgesehen, dass der Durchtrittskanal zumindest teilweise einen Boden aufweist, der um einen ggf. mittleren definierten Anstiegswinkel ansteigt. Insbesondere mit einem geringfügigen Anstieg des Bodens können besonders sensible Varianten der Steuerscheibe erzielt werden.
Bei nicht kreisförmigen Bewegungsbahnen ist vorgesehen, dass die Kanallänge wenigstens das 0,3-fache und vorzugsweise wenigstens das 0,4-fache der Gesamtbewegungslänge beträgt.
Weiterhin ist vorgesehen, dass die Steuerscheibe als feststehende Steuerscheibe für eine Mischkartusche ausgebildet ist. Die Steuerscheibe kann somit in einem Steuersatz üblicher Mischkartuschen eingesetzt werden, ohne dass die übrigen Komponenten einer Anpassung bedürfen.
Besonders vorteilhaft ist es ferner, wenn sich der Querschnitt des Durchtrittskanals in Richtung einer Warmwasserstellung verkleinert. Wird bei einer so gestalteten Ausführungsform des Durchtrittskanals beispielsweise der Bedienhebel von einem reinen Kaltwasserdurchfluss hin zu einem reinen Warmwasserdurchfluss bewegt, so verschließt eine auf der feststehenden Steuerscheibe aufliegende bewegbare Steuerscheibe mit zunehmender Bewegung den Durchtrittskanal des Kaltwassers. Hierbei wird der Querschnitt des Durchtrittskanals entsprechend der Drehbewegung reduziert. Gleichzeitig strömt das Wasser aber auch in Umfangsrichtung durch den Querschnitt des Durchtrittskanals, der je nach Anwendungsfall einen konstanten oder einen sich langsam reduzierenden Querschnitt aufweisen kann. Der Querschnitt des Durchtrittskanals kann so an die jeweiligen Anforderungen angepasst werden. Weiterhin ist es vorteilhaft, wenn der Boden in Umfangsrichtung einen mittleren Anstiegswinkel von weniger als 45°, vorzugsweise von weniger als 30° aufweist. Entscheidend für die vorliegende Erfindung ist dabei der mittlere Anstiegswinkel. Bei der Verwendung von kleineren Strukturen kann dieser mittlere Anstiegswinkel beispielsweise auch durch vertikale und horizontale oder beliebig geneigte kleinere Flächenabschnitte angenähert sein. Im Zusammenhang mit der vorliegenden Erfindung sind nicht zwangsläufig glatte Oberflächen erforderlich. In der Praxis haben sich mittlere Anstiegswinkel von beispielsweise 20° bis 25° besonders bewährt. Hierdurch erfährt der Durchtrittskanal während einer Einstellbewegung eine langsame aber dennoch ausreichend große Reduzierung.

Für eine problemlose Fertigung ist es zudem vorteilhaft, wenn wenigstens im Bereich der Einlassöffnung oder Auslassöffnung eine Sprungzone am Boden vorgesehen ist. Während die Wandstärke des Bodens im Bereich der Einlassöffnung besonders gering ist, kann im Bereich der Sprungzone beispielsweise ein Sprung der Wandstärke erfolgen, der die erforderliche Mindestwandstärke des Bodenbereichs des Durchtrittskanals einhält. Zusätzlich kann bei Bedarf auch im Bereich der Auslassöffnungen eine Sprungzone vorgesehen werden. Etwa wenn ein gewählter Anstiegswinkel besonders flach gewählt wird. Die Höhe der Sprungzonen sollte jedoch eine Höhe von 25 % der Bauhöhe der Steuerscheibe nicht übersteigen. Zudem sollten sich die Sprungzonen in Umfangsrichtung nicht über einen Bereich von mehr als 25 % einer Gesamtlänge des Durchtrittskanals erstrecken.

Schließlich kann die erfindungsgemäße Steuerscheibe in einem Steuersatz für Mischkartuschen und im Weiteren zusammen mit einer solchen Mischkartusche in einer Mischarmatur verwendet werden, welche hierdurch eine besonders hohe Sensibilität der Einstellbewegungen aufweisen.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, auf die sie jedoch nicht beschränkt ist. In der Zeichnung zeigt:
- Figur 1: einen erfindungsgemäßen Steuersatz in einer Schrägansicht;
- Figur 2: eine erfindungsgemäße Steuerscheibe in einer Schrägansicht;
- Figur 3: eine Draufsicht auf die Steuerscheibe nach Figur 2;
- Figur 4: eine Draufsicht auf den Steuersatz nach Figur 1;
- Figur 5: eine Draufsicht auf die Steuerscheibe gemäß Figur 2 mit verdeckten Kanten;
- Figur 6: eine Draufsicht auf geöffneten Steuersatz gemäß Figur 1 mit verdeckten Kanten;
- Figur 7: eine Schnittdarstellung A-A durch den Steuersatz gemäß Figur 6;
- Figur 8: den Steuersatz nach Figur 1 in einer teilweisen Schnittansicht; und
- Figur 9: einen Steuersatz mit einer linearen Relativbewegung.

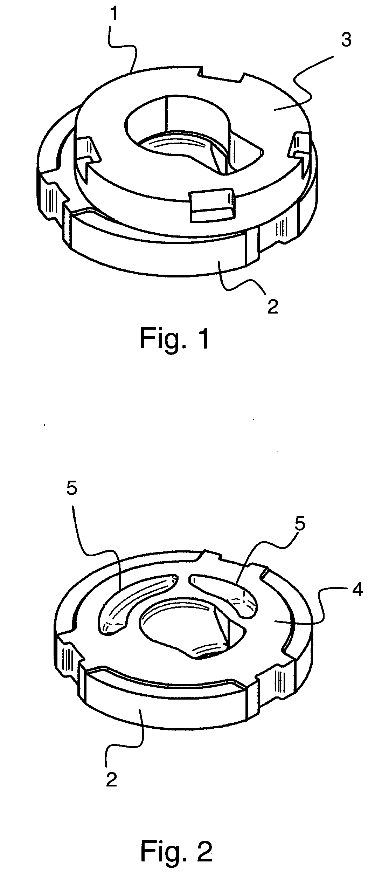

In Figur 1 ist ein erfindungsgemäßer Steuersatz 1 mit einer feststehenden Steuerscheibe 2 und einer bewegbaren Steuerscheibe 3 in einer Schrägansicht dargestellt. In der dargestellten Relativstellung zueinander werden die beiden Steuerscheiben 2, 3 innerhalb einer nicht dargestellten Mischkartusche verbaut. Die Figur 1 zeigt den Steuersatz 1 dabei in einem geschlossenen Zustand.

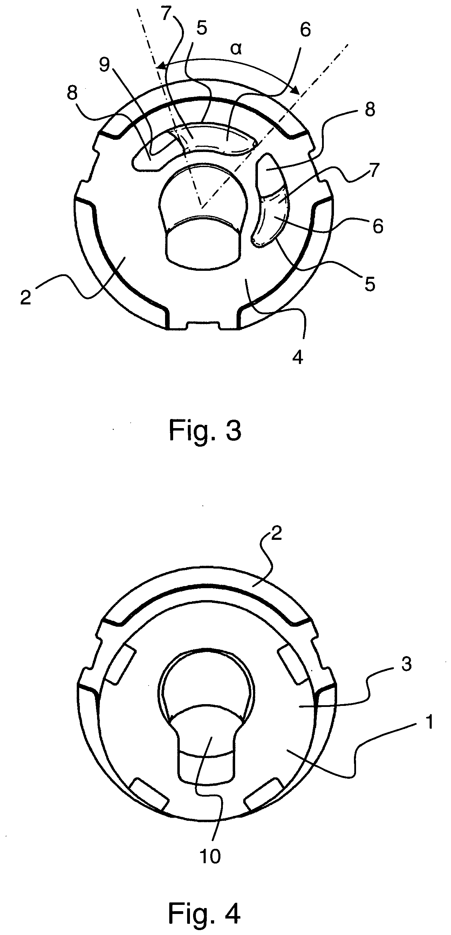

Im geschlossenen Zustand überdeckt die bewegbare Steuerscheibe 3 die an einer Auslassseite 4 befindlichen Auslassöffnungen 5 für Kalt- und Warmwasser, die in Figur 2 dargestellt sind und sperrt somit den Wasserdurchfluss. In Figur 3 ist die feststehende Steuerscheibe 2 nach Figur 2 nochmals in einer Draufsicht dargestellt. Gut erkennbar sind wiederum die Auslassöffnungen 5, die sich an der Auslassseite 4 befinden. Die Draufsicht zeigt weiterhin einen Boden 6 eines Durchtrittskanals 7. Weiterhin sind in der Draufsicht teilweise verdeckte Einlassöffnungen 8 erkennbar, die an einer Einlassseite 9 an der Unterseite der feststehenden Steuerscheibe 2 liegen. Der Durchtrittskanal 7 erstreckt sich in einer Umfangsrichtung der feststehenden Steuerscheibe 2 über einen Winkelbereich a. Während die Erfindung in einem sehr großen Winkelbereich zwischen 25° und 80° realisierbar ist, liegt die dargestellte Ausführungsform im bevorzugten Winkelbereich zwischen 50° und 70°. Wie in Figur 3 zudem gut erkennbar ist, können für die beiden Durchlasskanäle 7 unterschiedliche Kanallängen gewählt werden, so dass Kaltwasser und Warmwasser durch unterschiedlich lange Durchtrittskanäle 7 geleitet werden.

In Figur 4 ist der Steuersatz 1 nach Figur 1 nochmals in einer Draufsicht gezeigt, wobei gut erkennbar ist, dass die bewegbare Steuerscheibe 3 so auf der feststehenden Steuerscheibe 2 aufliegt, dass beide Auslassöffnungen 5 verschlossen sind. Lediglich ein Auslass 10 für Mischwasser ist in allen Bewegungszuständen stets geöffnet.

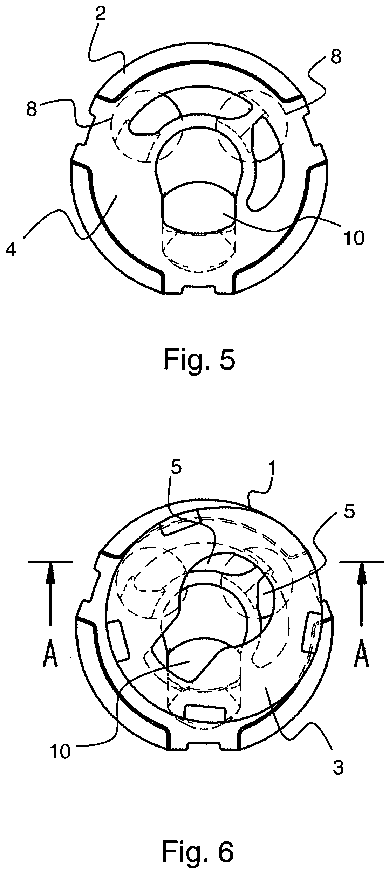

In Figur 5 ist die feststehende Steuerscheibe 2 nach Figur 3 nochmals mit gestrichelt dargestellten verdeckten Kanten gezeigt. Gut erkennbar ist hierbei die kreisrunde Gestaltung der Einlassöffnungen, durch die das Warm- bzw. Kaltwasser in die feststehende Steuerscheibe 2 einströmen kann.

In Figur 6 ist der in einer Mischstellung geöffnete Steuersatz 1 nochmals mit verdeckten Kanten dargestellt. Die bewegbare Steuerscheibe 3 gibt in dieser Stellung beide Auslassöffnungen 5 teilweise frei, so dass jeweils der Kalt- und der Warmwasserstrom einströmen und über den Auslass 10 wieder als Mischwasser aus der Mischkartusche ausströmen können.

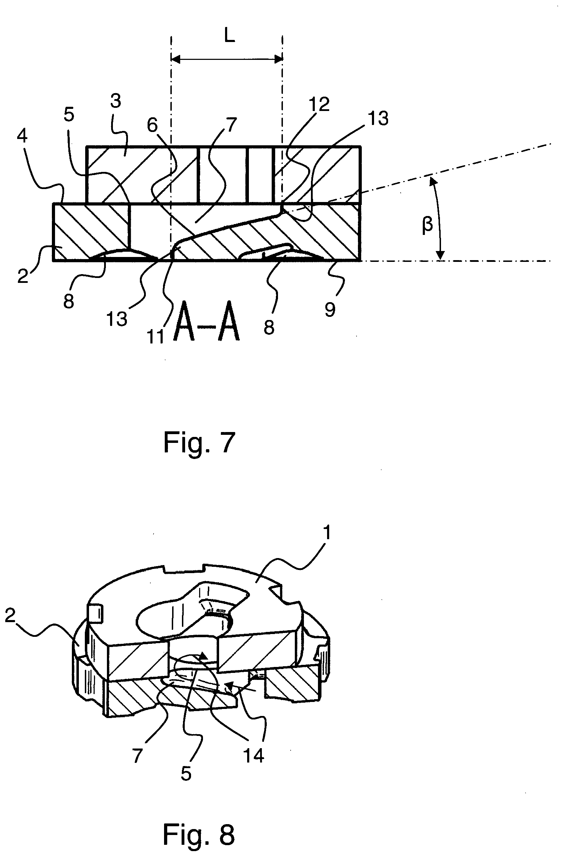

In Figur 7 findet sich die Schnittdarstellung entlang der Linie A-A gemäß Figur 6. Die bewegbare Steuerscheibe 3 liegt dabei planar auf der feststehenden Steuerscheibe 2 auf. Die beiden kreisrunden Einlassöffnungen an der Einlassseite 9 der feststehenden Steuerscheibe 2 sind wiederum erkennbar. Zwischen einer Einlasskante 11 und einer Auslasskante 12 ist der Durchtrittskanal 7 ausgebildet. Der Durchtrittskanal 7 weist die Länge L auf, wobei der Boden 6 um einen Anstiegswinkel (β) von weniger als 30° geneigt ist. Die Länge L ist dabei parallel zur Einlass- (9) bzw. Auslassseite (4) der Steuerscheibe (2) gemessen. Bei der vorliegend dargestellten Ausführungsform entspricht der Anstiegswinkel beispielsweise ca. 15°. Im Bereich der Einlasskante 11 und der Auslasskante 12 befinden sich jeweils sehr kleine Sprungzonen, in denen der mittlere Anstiegswinkel überschritten wird. Diese Sprungzonen sind jedoch im Vergleich zur Länge des Durchtrittskanals 7 verhältnismäßig kurz.
In Figur 8 ist der erfindungsgemäße Steuersatz 1 gemäß Figur 1 nochmals in einem teilweise freigeschnittenen Zustand dargestellt. Gut erkennbar ist, wie der durch den in Richtung des Pfeils 14 fließende Wasserstrom durch den Durchtrittskanal 7 strömt und dabei gedrosselt wird, sobald sich die bewegbare Steuerscheibe 3 im Uhrzeigersinn dreht. Bei dieser Drehbewegung wird dann zugleich der Querschnitt der Auslassöffnung 5 reduziert als auch der Querschnitt des Durchtrittskanals 7, wodurch die besonders sensible Einstellbarkeit erreicht wird.

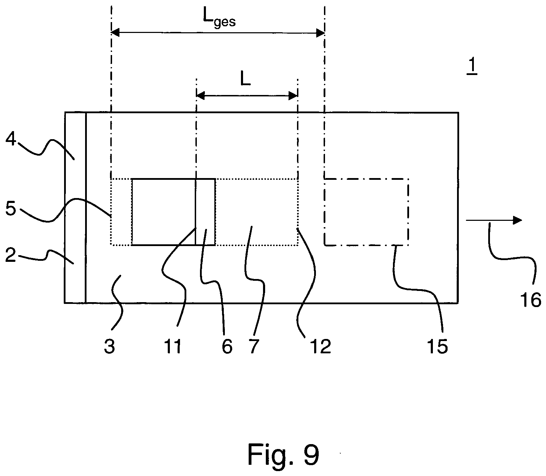

In Figur 9 ist ein Beispiel eines Steuersatzes (1) in einer Draufsicht dargestellt, bei dem die obenliegende bewegbare Steuerscheibe (3) ein Stück weit entlang einer linearen Richtungsbahn, entsprechend dem Pfeil (16), gegenüber der feststehenden und darunterliegenden feststehenden Steuerscheibe (2) nach rechts verschoben ist und auf deren Auslassseite 4 aufliegt. Die teilweise durch die bewegbare Steuerscheibe (3) verdeckte Kontur des Durchtrittkanals (7) ist mittels der gepunkteten Linie dargestellt. Sowohl die Auslassöffnung (5) als auch die Auslasskante (12) sind auf diese Weise verdeckt dargestellt. Zwischen der Einlasskante (11) und der Auslasskante (12) ist die Kanallänge (L) aufgespannt, die in dem gezeigten Ausführungsbeispiel ungefähr die 0,5fache Länge der Gesamtbewegungslänge (L_{ges}) aufweist. Die Gesamtbewegungslänge (L_{ges}) erstreckt sich von einer ersten Extremstellung (ganz offen) bis zu einer zweiten Extremstellung (Absperrposition) der bewegbaren Steuerscheibe (3). Die zweite Extremstellung ist vorliegend durch die strichpunktierte Linie der Absperrposition 15 dargestellt. In der Absperrposition kann kein Wasser durch den Steuersatz fließen.

### Bezugszeichenliste:

- 1: Steuersatz
- 2: feststehende Steuerscheibe
- 3: bewegbare Steuerscheibe
- 4: Auslassseite
- 5: Auslassöffnung
- 6: Boden
- 7: Durchtrittskanal
- 8: Einlassöffnung
- 9: Einlassseite
- 10: Auslass (Mischwasser)
- 11: Einlasskante
- 12: Auslasskante
- 13: Sprungzone
- 14: Pfeil
- 15: Absperrposition
- 16: Pfeil

## Patentansprüche

1. Steuerscheibe (2) für einen Steuersatz (1) einer sanitären Mischarmatur, mit jeweils mindestens einem Durchtrittskanal (7) für Kaltwasser und Warmwasser und einem Auslass (10) für Mischwasser, wobei wenigstens ein Durchtrittskanal (7) einen sich in Bewegungsrichtung der beweglichen Scheibe verkleinernden Querschnitt aufweist, der von einem Boden (6) teilweise begrenzt wird,
**dadurch gekennzeichnet, dass**
der Boden (6) des Durchtrittskanals (7) sich über einen Winkel (a) erstreckt, der zwischen 25° und 80° liegt, wobei der Winkel (a) bestimmt wird im Fall von kreisrunden Grundformen der Steuerscheibe (2) von einer zentralen Mittelachse und im Fall von nicht kreisrunden Geometrien von dem Flächenschwerpunkt oder einer Drehachse eines Bedienhebels der Mischarmatur, wobei der Durchtrittskanal (7) zumindest teilweise einen Boden (6) aufweist, der in Richtung von einer Einlasskante (11) zu einer Auslasskante (12) um einen Anstiegswinkel (β) ansteigt, und wobei die Böden (6) der Durchtrittskanäle (7) für das Kaltwasser und Warmwasser in eine gleiche Umfangsrichtung der Steuerscheibe (2) ansteigen.

2. Steuerscheibe (2) nach dem vorhergehenden Anspruch, wobei der Boden (6) des Durchtrittskanals (7) sich über einen Winkel (a) erstreckt, **dadurch gekennzeichnet, dass** der Winkel (a) zwischen 50° und 70° liegt.

3. Steuerscheibe (2) nach einem der vorhergehenden Ansprüche, **dadurch gekennzeichnet, dass** die Steuerscheibe (2) als feststehende Steuerscheibe (2) für eine Mischkartusche ausgebildet ist.

4. Steuerscheibe (2) nach einem der vorhergehenden Ansprüche, **dadurch gekennzeichnet, dass** sich der Querschnitt des Durchtrittskanals (7) in Richtung einer Warmwasserstellung verkleinert.

5. Steuerscheibe (2) nach einem der vorhergehenden Ansprüche, **dadurch gekennzeichnet, dass** der Boden (6) in Umfangsrichtung einen mittleren Anstiegswinkel (β) von weniger als 45°, vorzugsweise von weniger als 30°, aufweist.

6. Steuerscheibe (2) nach einem der vorhergehenden Ansprüche, **dadurch gekennzeichnet, dass** wenigsten im Bereich der Einlassöffnung (8) oder Auslassöffnung (5) eine Sprungzone (13) vorgesehen ist, die eine Höhe von 25 % einer Bauhöhe der Steuerscheibe (2) nicht übersteigt und sich in Umfangsrichtung nicht über einen Bereich von mehr als 25 % einer Gesamtlänge des Durchtrittskanals erstreckt, wobei in der Sprungzone (13) ein Sprung der Wandstärke des Bodens (6) vorliegt.

7. Steuersatz (1) für Mischkartuschen mit einer Steuerscheibe (2) nach einem der vorhergehenden Ansprüche.

8. Mischarmatur mit einem Steuersatz (1) nach dem vorhergehenden Anspruch.

## Claims

1. Control disc (2) for a control set (1) of a sanitary mixer tap, having at least one through-channel (7) each for cold water and hot water and an outlet (10) for mixed water, wherein at least one through-channel (7) has a cross-section which decreases in size in the direction of movement of the movable disc, which cross-section is in part delimited by a base (6),
**characterised in that**
the base (6) of the through-channel (7) extends over an angle (α) which is between 25° and 80°, the angle (α) being determined by a central centre axis in the case of circular basic shapes of the control disc (2) and by the centre of area or a rotational axis of an operating lever of the mixer tap in the case of non-circular geometries, wherein the through-channel (7) has, at least in part, a base (6) which ascends in the direction from an inlet edge (11) to an outlet edge (12) by an angle of ascent (β), and wherein the bases (6) of the through-channels (7) for the cold water and hot water ascend in the same circumferential direction of the control disc (2).

2. Control disc (2) according to the preceding claim, wherein the base (6) of the through-channel (7) extends over an angle (α), **characterised in that** the angle (α) is between 50° and 70°.

3. Control disc (2) according to either one of the preceding claims, **characterised in that** the control disc (2) is in the form of a fixed control disc (2) for a mixing cartridge.

4. Control disc (2) according to any one of the preceding claims, **characterised in that** the cross-section of the through-channel (7) decreases in size in the direction of a hot water setting.

5. Control disc (2) according to any one of the preceding claims, **characterised in that** the base (6) has in the circumferential direction an average angle of ascent (β) of less than 45°, preferably less than 30°.

6. Control disc (2) according to any one of the preceding claims, **characterised in that** at least in the region of the inlet opening (8) or outlet opening (5) there is provided a jump zone (13) which does not exceed a height of 25 % of an overall height of the control disc (2) and in the circumferential direction does not extend over a region of more than 25 % of the total length of the through-channel, wherein in the jump zone (13) there is a jump in the wall thickness of the base (6).

7. Control set (1) for mixing cartridges having a control disc (2) according to any one of the preceding claims.

8. Mixer tap having a control set (1) according to the preceding claim.

## Revendications

1. Disque de commande (2) destiné à un ensemble de commande (1) d'une robinetterie sanitaire mitigeuse, comprenant au moins un canal de passage (7) respectif pour l'eau froide et pour l'eau chaude et une sortie (10) pour l'eau mitigée, au moins un canal de passage (7) ayant une surface diminuant dans la direction de déplacement du disque mobile qui est limitée partiellement par un fond (6),
**caractérisé en ce que**
le fond (6) du canal de passage (7) s'étend sur un angle (α) qui est compris entre 25° et 80°, l'angle (α) étant déterminé, dans le cas d'une forme de base circulaire du disque de commande (2) à partir de l'axe central médian, et dans le cas d'une géométrie non circulaire à partir du centre de gravité de la surface ou de l'axe de rotation d'un levier de manoeuvre de la robinetterie mitigeuse, le canal de passage (7) comprenant au moins partiellement un fond en pente (6) ayant un angle de pente (β) dans la direction allant d'un bord d'entrée (11) à un bord de sortie (12) et les fonds (6) des canaux de passage (7) pour l'eau froide et pour l'eau chaude étant en pente dans une même direction périphérique du disque de commande (2).

2. Disque de commande (2) conforme à la revendication précédente, dans lequel le fond (6) du canal de passage (7) s'étend sur un angle (α),
**caractérisé en ce que**
l'angle (α) est compris entre 50° et 70°.

3. Disque de commande (2) conforme à l'une des revendications précédentes,
**caractérisé en ce que**
le disque de commande (2) est réalisé sous la forme d'un disque de commande fixe (2) pour une cartouche mitigeuse.

4. Disque de commande (2) conforme à l'une des revendications précédentes,
**caractérisé en ce que**
la section de canal de passage (7) diminue en direction d'une position d'eau chaude.

5. Disque de commande (2) conforme à l'une des revendications précédentes,
**caractérisé en ce que**
le fond (6) a en direction périphérique un angle de pente moyen (β) inférieur à 45°, de préférence inférieur à 30°.

6. Disque de commande (2) conforme à l'une des revendications précédentes,
**caractérisé en ce que**
au moins dans la zone de l'ouverture d'entrée (8) ou de l'ouverture de sortie (5) il est prévu une zone de discontinuité (13) qui ne dépasse pas une hauteur égale à 25% de la hauteur de construction du disque de commande (2), et ne s'étend pas en direction périphérique sur une zone de plus de 25% de la longueur totale du canal de passage, une discontinuité de l'épaisseur de paroi du fond (6) étant présente dans la zone de discontinuité (13).

7. Ensemble de commande (1) pour des cartouches mitigeuses comprenant un disque de commande (2) conforme à l'une des revendications précédentes.

8. Robinetterie mitigéuse comprenant un ensemble de commande (1) conforme à la revendication précédente.
